# EUROPÄISCHE PATENTSCHRIFT

(11) **EP 1 144 146 B1**
(45) Veröffentlichungstag und Bekanntmachung des Hinweises auf die Patenterteilung: **19.03.2003**
(21) Anmeldenummer: 99960924.1
(22) Anmeldetag: 16.11.1999
(51) Int. Cl.: B22F 1/00

(54) **VORRICHTUNG FÜR DAS SELEKTIVE LASER-SCHMELZEN ZUR HERSTELLUNG EINES FORMKÖRPERS**
DEVICE FOR SELECTIVE LASER SINTERING FOR PRODUCING A MOULDED PART
DISPOSITIF DE FUSION SELECTIVE AU LASER POUR LA FABRICATION D'UN CORPS MOULE

(30) Priorität: 23.11.1998 DE 19853978
(43) Veröffentlichungstag der Anmeldung: 17.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINERS, Wilhelm, D-52072 Aachen (DE); WISSENBACH, Konrad, D-52134 Herzogenrath (DE); GASSER, Andres, D-52066 Aachen (DE)
(74) Vertreter: Gagel, Roland, Dr.
(86) Internationale Anmeldenummer: DE9903668
(87) Internationale Veröffentlichungsnummer: WO00030790

(56) Entgegenhaltungen:
- WO-A-88/02677
- WO-A-90/03893

## Beschreibung

Die Erfindung betrifft eine Vorrichtung für das selektive Laser-Schmelzen zur Herstellung eines Formkörpers, beispielsweise des Prototyps eines Bauteils.
Die vorliegende Erfindung bezieht sich auf eine Technik, die unter dem Namen Rapid Prototyping bekannt ist. Rapid Prototyping-Verfahren werden in der Produktentwicklung eingesetzt, um die Produktentwicklungszeit zu verkürzen sowie die Produktqualität zu steigern. Dies wird dadurch ermöglicht, daß mittels der Rapid Prototyping-Verfahren Prototypen sehr schnell direkt aus dem 3D CAD Modell hergestellt werden können. Die bisher erforderliche zeitaufwendige Erstellung eines NC-Programms für eine Fräs- oder Erodierbearbeitung oder die Herstellung formgebender Werkzeuge entfällt.

Die Entwicklung neuer bzw. die Weiterentwicklung bestehender Rapid Prototyping-Verfahren hat das Ziel, möglichst seriennahe oder sogar serienidentische Werkstoffe verarbeiten zu können. Dies gilt vor allem für metallische Prototypen oder Prototypwerkzeuge. Ein bekanntes Verfahren des selektiven Laser-Schmelzens ermöglicht die Herstellung von Bauteilen aus handelsüblichen Stählen. Die Bauteile werden, wie bei allen Rapid Prototyping-Verfahren, schichtweise hergestellt. Dazu wird der Werkstoff in Pulverform jeweils als dünne Schicht auf eine Bauplattform aufgebracht. Das Pulver wird lokal, entsprechend der Bauteilgeometrie der zu bearbeitenden Schicht, mit einem Laserstrahl aufgeschmolzen. Die mit diesem Verfahren hergestellten Bauteile aus Stahl (z.B. aus Edelstahl 1.4404) erreichen bzgl. ihrer Dichte und Festigkeit die angegebenen Werkstoffspezifikationen. Damit können sie als Funktionsprototypen oder direkt als fertiges Bauteil eingesetzt werden.

In der DE 196 49 865 C1 wird hierzu ein Verfahren vorgeschlagen, bei dem ein bindemittel- und flußmittelfreies metallisches Werkstoffpulver auf die Bauplattform aufgebracht und durch den Laserstrahl entsprechend der Bauteilgeometrie auf Schmelztemperatur erhitzt wird. Die Energie des Laserstrahls wird so gewählt, daß das metallische Werkstoffpulver an der Auftreffstelle des Laserstrahls über seine gesamte Schichtdicke vollständig aufgeschmolzen wird. Der Laserstrahl wird bei diesem Verfahren in mehreren Spuren derart über den vorgegebenen Bereich der jeweiligen Werkstoffpulverschicht geführt, daß jede folgende Spur des Laserstrahls die vorherige Spur teilweise überlappt. Gleichzeitig wird eine Schutzgasatmosphäre über der Wechselwirkungszone des Laserstrahls mit dem metallischen Werkstoffpulver aufrechterhalten, um Fehlstellen zu vermeiden, die beispielsweise durch Oxidation hervorgerufen werden können. Ein Beispiel für eine Vorrichtung zum selektiven Laser-Schmelzen, wie sie in der DE 196 49 865 C1 beschrieben ist, zeigt Figur 1.

Die Verteilung des metallischen Werkstoffpulvers über der Bauplattform bzw. dem Bauraum erfolgt bei derartigen Vorrichtungen mittels einer Nivelliereinrichtung, beispielsweise durch eine Linearbewegung eines Schiebers über Vorratsbehälter und Bauraum.

Der Schieber verteilt nach jeder mit dem Laserstrahl bearbeiteten Schicht neues Pulver über das um eine Schichtdicke abgesenkte Bauteil. Die mit dem Laserstrahl bearbeitete Schicht ist jedoch nicht ideal glatt. Sie weist Unebenheiten auf, die teilweise größer als die Schichtdicke sein können. An diesen Stellen schleift die Unterseite des Schiebers beim Auftragen der neuen Pulverschicht über die bearbeitete Schicht. Durch die abrasive Wirkung wird dadurch die Unterseite des Schiebers mit zunehmender Schichtzahl abgetragen. Durch den Verschleiß der Schieberunterkante entstehen Unebenheiten (Riefen) in den aufgetragenen Pulverschichten, die sich wiederum als Unebenheiten im Bauteil abbilden. Außerdem verlagert sich die Ebene des Pulverbetts aufgrund des zunehmenden Verschleißes der Schieberunterkante nach oben. Diese Abweichung führt zu einer Überhöhung des Bauteils in z-Richtung.

Aus diesem Grund ist der Verschleiß des Schiebers während eines Bauprozesses sehr nachteilig. Die Verwendung eines extrem verschleißfesten Werkstoffs für den Schieber hat den Nachteil, daß bei starkem Kontakt zwischen Schieber und Bauteil die Kraft für die Schieberbewegung sehr groß wird. Dabei können entweder der Schieber-Antrieb überlastet oder bei entsprechend starkem Antrieb das Bauteil zerstört werden.

Murphy et al., The Rapid Manufacture of Metallic Components by Laser Surface Cladding, in: Laser Assisted Net shape Engineering, Proc. of the LANE '94, Vol. II, Bamberg 1994, S. 803-814, beschreibt ein Verfahren des schichtweisen Aufbaus eines Bauteils unter Einsatz des "Laser-Cladding", bei dem die jeweilige Oberfläche des im Aufbau befindlichen Bauteils bei gleichzeitiger Zufuhr von Metallpulver spurweise mit einem Laser aufgeschmolzen wird. Dieses Verfahren arbeitet derart ungenau, daß nach der Fertigung jeder Schicht eine spanende Nachbearbeitung erfolgen muß, um die gewünschte Dicke der Schicht exakt einstellen zu können. Diese Nachbearbeitung wird mit einer geeigneten Fräsvorrichtung durchgeführt.

Die DE 195 14 740 C1 zeigt eine Vorrichtung gemäß dem Oberbegriff des Patentanspruches 1, die allerdings für das Verfahren des selektiven Lasersinterns vorgesehen ist. Bei dieser Vorrichtung ist die Schneide des Schiebers bzw. Beschichters asymmetrisch ausgestaltet - mit einer Beschichtungskante und einer Glättkante - , so daß der Schieber je nach Richtung der Schiebebewegung entweder Werkstoff verteilen oder verfestigten Werkstoff verdichten und glätten kann. Dieses Glätten und Verdichten ist im Fall des selektiven Lasersinterns nur aufgrund der Weichheit des verfestigten Materials möglich.

Die WO 90/03893 beschreibt ein Verfahren und eine Vorrichtung zum Aufbauen eines Formkörpers aus Einzelschichten. Die Schichten werden hierbei zunächst pulverförmig von oben auf eine Aufbaufläche aufgebracht und in der gewünschten Kontur mit einem Laserstrahl verfestigt. Die zugehörige Vorrichtung umfasst ein Nivellierelement, beispielsweise in Form eines Schabers, zum Einebnen der aufgebrachten Pulverschicht. Weiterhin ist eine Walze vorgesehen, um die jeweilige Schicht vor oder nach der Laserbearbeitung zusätzlich zu verfestigen bzw. komprimieren. Eine Verfestigung nach der Bearbeitung ist dabei jedoch nur bei weichen Materialien möglich. Auch bei dieser Vorrichtung tritt somit das Problem des Verschleißes des Nivellierelementes auf, wenn Formkörper aus harten Materialien hergestellt werden.

Die Aufgabe der Erfindung besteht darin, eine Vorrichtung für das selektive Laser-Schmelzen anzugeben, die einen Verschleiß des Nivellierelementes vermeidet und den Aufbau von Schichten konstanter Dicke ermöglicht.

Erfindungsgemäß ist hierzu eine Walze als Schleifeinrichtung vorgesehen, die die Oberfläche jeder bearbeiteten Schicht vor der Beschichtung mit einer neuen Pulverschicht glätten kann. Damit wird jeglicher Kontakt zwischen dem Nivellierelement und dem Bauteil vermieden und eine hohe Konstanz der Schichtdicke ermöglicht, so daß sowohl der Verschleiß verhindert als auch die Bauteilgenauigkeit erhöht werden können.

Die erfindungsgemäße Vorrichtung besteht aus einer Prozeßkammer mit einem Aufbauvolumen für den Formkörper, das unterhalb einer Bodenfläche der Prozeßkammer vorgesehen ist, sowie einer Nivelliereinrichtung zur Verteilung von Werkstoffpulver als Schicht konstanter Dicke über einem Bereich der Bodenfläche der Prozeßkammer. Die Nivelliereinrichtung weist hierbei ein Element auf, beispielsweise einen Schieber, das zur Verteilung des Werkstoffpulvers über die Bodenfläche bewegt wird. Die Vorrichtung umfaßt erfindungsgemäß weiterhin eine Walze als Schleifeinrichtung in der Prozeßkammer, mit der die Bearbeitungsfläche des im Aufbauvolumen befindlichen Formkörpers geglättet werden kann.
Das Werkstoffpulver kann hierbei beispielsweise aus einem Vorratsvolumen in der Prozeßkammer oder auch von außerhalb der Prozeßkammer zugeführt werden.

Mittels dieser Schleifeinrichtung erfolgt die Glättung der Oberfläche der bearbeiteten Schicht. Die Schleifeinrichtung ist als Walze ausgeführt, deren Oberfläche vorzugsweise mit einem Schleifmedium (z.B. Korrund oder Diamant) versehen ist. Die Anordnung der Walze erfolgt so, daß die tiefste Stelle der Walze auf der gleichen Höhe wie die Unterkante des Nivellierelementes, beispielsweise eines Schiebers, liegt.

Nach der Bearbeitung einer Schicht mit dem Laserstrahl wird die Walze in einer Linearbewegung über den Bauraum der Anlage geführt. Vorzugsweise rotiert die Walze, beispielsweise unter Verwendung eines zusätzlichen Riemenantriebes, gleichzeitig mit der Linearbewegung. Die Rotationsrichtung wird so gewählt, daß an der Berührungslinie zwischen Bauteiloberfläche und Walze die Geschwindigkeitsvektoren der Linearbewegung und der Rotationsbewegung gleich gerichtet sind. Durch das Schleifmedium auf der Walzenoberfläche werden die Unebenheiten auf der Oberfläche der Bauteilschicht abgeschliffen und dadurch die Oberfläche der Schicht geglättet.
Der Glättungsprozeß kann wahlweise vor oder nach Absenkung der Bauplattform durchgeführt werden. Außerdem kann der Glättungsprozeß wahlweise nach der Bearbeitung jeder Schicht, nach einer bestimmten Anzahl von Schichten oder bei speziell ausgewählten Schichten, z.B. bei Schichten deren Oberfläche gleichzeitig die Oberfläche des fertigen Bauteils bildet, durchgeführt werden. Der Glättungsprozeß wird parallel mit der Schieberbewegung ausgeführt, da die Walze vor dem Schieber angebracht ist, so daß die Linearbewegung von Walze und Schieber gleichzeitig erfolgen. In diesem Fall wird das Bauteil um die definierte Schichtdicke abgesenkt, nachdem dessen Oberfläche durch die Walze geglättet wurde und bevor der Schieber das Bauteil erreicht hat. Dadurch lassen sich sehr konstante Schichtdicken erzeugen.

Die Walze kann jedoch ebenso, unabhängig von der Schieberbewegung, über einen eigenen Linearantrieb, beispielsweise senkrecht zur Richtung der Schieberbewegung, über das Bauteil geführt werden.

Die erfindungsgemäße Vorrichtung wird nachfolgend anhand eines Ausführungsbeispiels in Verbindung mit den Zeichnungen nochmals erläutert. Hierbei zeigen
- Figur 1: ein Beispiel für eine Vorrichtung zum selektiven Laser-Schmelzen, in der die erfindungsgemäße Vorrichtung eingesetzt werden kann; und
- Figur 2: ein Beispiel für eine Ausgestaltungsmöglichkeit der erfindungsgemäßen Vorrichtung.

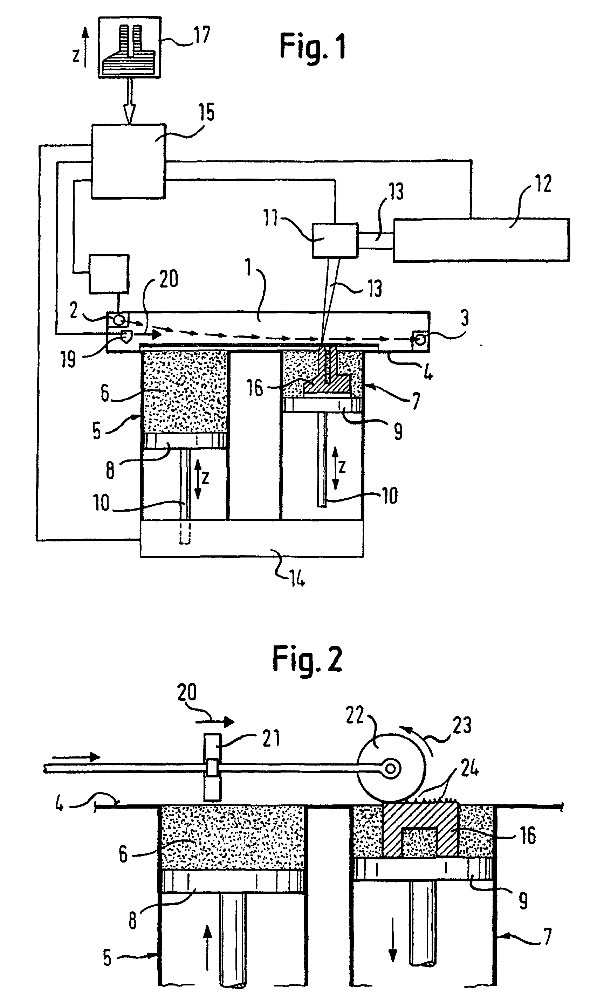

Ein Beispiel für eine Vorrichtung zum selektiven Laser-Schmelzen, wie sie beispielsweise in der DE 196 49 865 C1 beschrieben ist, ist schematisch in Figur 1 gezeigt. Die Vorrichtung umfaßt eine Prozeßkammer 1 mit einem Schutzgas-Einlaß 2, der im Bereich der oberen Seitenkante der Prozeßkammer angeordnet ist, sowie einem Schutzgas-Auslaß 3 an der gegenüberliegenden Kante, der im Bereich der Bodenfläche 4 der Prozeßkammer angeordnet ist. Unterhalb der Bodenfläche 4 der Prozeßkammer sind ein Vorratsbehälter 5, der mit metallischem Werkstoffpulver 6 gefüllt ist, sowie eine Aufbaukammer 7 vorgesehen. In beiden ist jeweils ein über einen Hubkolben 10 durch den Antrieb 14 angetriebener Hubtisch 8, 9 angeordnet. Oberhalb der Prozeßkammer im Bereich der Aufbaukammer ist eine Abtasteinrichtung 11 vorgesehen, die einen von einem Laser 12 erzeugten Laserstrahl 13 auf den Hubtisch 9 mit der Bauplattform richtet.

Um einen Formkörper, beispielsweise den Prototyp eines Bauteils 16 herzustellen, werden zunächst über eine Eingabeeinheit 17 die Bauteilkoordinaten in die zentrale Verarbeitungseinheit 15 eingegeben. Nach entsprechender Aufbereitung der Daten wird der Hubtisch 9 in der Aufbaukammer 7 in eine erste, obere Stellung verfahren, in der die Auflagefläche dem Niveau der Bodenfläche 4 entspricht. Der Hubtisch 8 des Vorratsbehälters 5 wird zunächst in die untere Position verfahren, und in den Vorratsbehälter 5 wird ein feinkörniges Pulver 6 aus dem Metall eingefüllt, aus dem das Bauteil 16 aufgebaut werden soll. Das metallische Werkstoffpulver 6 wird anschließend über die Bodenfläche 4 hinaus mittels des Hubtischs 8 angehoben und mit einer Nivelliereinrichtung 19, in Fig. 1 schematisch mit einer Spitze dargestellt, als dünne Schicht über die Bodenfläche 4 der Prozeßkammer 1 verteilt, wie ebenfalls in Figur 1 zu erkennen ist. Hierfür wird die Nivelliereinrichtung 19 in Richtung des Pfeils 20 verfahren. Die Nivelliereinrichtung 19, die ebenfalls mit der zentralen Verarbeitungseinheit 15 in Verbindung steht, weist einen Abstand von etwa 0,01 bis 0,1 mm zur Bodenfläche 4 auf, der der Dicke einer aufzubauenden Schicht des Bauteils 16 entspricht. Nachdem diese vorbereitende Maßnahme abgeschlossen ist, werden der Laser 12 und die Abtasteinrichtung 11 angesteuert, um den Laserstrahl 13 auf das über der Auflagefläche befindliche metallische Werkstoffpulver zu richten, um entsprechend den Koordinaten, dasjenige Pulver aufzuschmelzen, das der untersten Schicht des Bauteils 16 entspricht. Nachdem die unterste Schicht des Bauteils 16 gebildet ist, wird der Hubtisch 9 um einen definierten Abstand nach unten verfahren, so daß die Oberseite der ersten Schicht wiederum in etwa in der Ebene der Bodenfläche 4 der Prozeßkammer 1 liegt. Danach wird wiederum die Nivelliereinrichtung 19 betätigt, um eine definierte Pulverschicht auf die darunterliegende Schicht des Bauteils 16 aufzutragen. Danach wird der Laser 13 wieder Spur für Spur entsprechend den Bauteilkoordinaten über das Pulver gefahren, um dieses aufzuschmelzen. Diese Verfahrensweise wird wiederholt, bis das gesamte Bauteil aufgebaut ist.

Figur 2 zeigt ein Beispiel, bei dem die Nivelliereinrichtung 19 einen Schieber 21 umfaßt, der zur Verteilung des Werkstoffpulvers entlang des Pfeiles 20 bewegt werden kann. Hierbei sind sowohl der Vorratsbehälter 5 mit dem Hubtisch 8 und dem metallischen Werkstoffpulver 6 wie auch das Aufbauvolumen 7 mit der Bauplattform 9 dargestellt. Hubtisch 8 und Bauplattform 9 werden während der Fertigung des Bauteiles 16 in Pfeilrichtung bewegt, wie bereits in Verbindung mit der Vorrichtung der Figur 1 erläutert. Vor dem Schieber 21 ist hierbei eine Walze 22 angeordnet, die mit dem Schieber starr verbunden ist. Die Walze wird während der Bewegung des Schiebers zur Verteilung des Werkstoffpulvers rotierend in Pfeilrichtung 23 angetrieben. Durch diese Anordnung wird erreicht, daß bei jeder Bewegung des Schiebers zur Verteilung des Werkstoffpulvers zunächst die Walze über die soeben bearbeitete Oberfläche des Bauteils 16 bewegt wird und dort die unerwünschten Unebenheiten 24 der vorangehenden Bearbeitung glättet. Die Walze 22 ist hierbei mit einem Schleifmaterial beschichtet. Der Abstand der untersten Stelle der Walze 22 zur Bodenfläche 4 entspricht dem Abstand der untersten Kante des Schiebers 21 zur Bodenfläche 4.

Der Antrieb des Schiebers 21 ist vorzugsweise außerhalb der Prozeßkammer angebracht. Die Bewegung des Antriebs wird dabei durch Stangen, die durch die Seitenwand der Kammer geführt werden, auf den Schieber übertragen. In einem speziellen Ausführungsbeispiel wird der Schieber, der sich über die gesamte Breite der Prozeßkammer erstreckt, innerhalb der Kammer beidseitig auf Flachstahlschienen geführt. Die am Schieber angebrachten Gleitelemente sind in diesem Fall aus Teflon gefertigt. Die Höhe des Schiebers beträgt 10 mm. Der Schieber wird aus einem nichtmagnetischen Werkstoff gefertigt, um das Anhaften von magnetischen Pulverwerkstoffen zu vermeiden. Der Durchmesser der Walze kann hierbei beispielsweise zwischen 10 und 30 mm betragen. Die Breite der Walze entspricht mindestens der Breite des Aufbauvolumens.

Die erfindungsgemäße Vorrichtung wird vorzugsweise in einer Vorrichtung in Verbindung mit einem Verfahren, wie sie in der DE 196 49 865 C1 im Detail dargestellt sind, eingesetzt.

Mit der erfindungsgemäßen Vorrichtung ist es möglich, den Verschleiß des Schiebers durch Kontakt mit Unebenheiten der bearbeiteten Schichten zu verhindern. Jede Schicht kann vor dem Auftragen einer neuen Pulverschicht geglättet werden. Dadurch wird der Verschleiß des Schiebers vermieden und es ist möglich, Bauteile mit höherer Genauigkeit und besserer Oberflächenqualität herzustellen.

## Patentansprüche

1. Vorrichtung für das selektive Laser-Schmelzen zur Herstellung eines Formkörpers, mit
einer Prozeßkammer (1) mit einem Aufbauvolumen (7) für den Formkörper (16), das unterhalb einer Bodenfläche (4) der Prozeßkammer vorgesehen ist, und einer Nivelliereinrichtung zur Verteilung von Werkstoffpulver als Schicht konstanter Dicke über einem Bereich der Bodenfläche, wobei die Nivelliereinrichtung ein Element (21) aufweist, das zur Verteilung des Werkstoffpulvers über die Bodenfläche bewegt wird,
**dadurch gekennzeichnet,**
**daß** in der Prozeßkammer (1) eine als Walze (22) ausgebildete Schleifeinrichtung vorgesehen ist, mit der die Oberfläche jeder bearbeiteten Schicht des im Aufbauvolumen (7) befindlichen Formkörpers (16) vor der Beschichtung mit einer neuen Werkstoffpulverschicht durch Schleifen geglättet werden kann, wobei die Walze (22) derart vor dem Element (21) befestigt ist, daß durch eine Bewegung des Elementes (21) zur Verteilung des Werkstoffpulvers die Walze (22) über die Bearbeitungsfläche bewegt wird, wobei die Walze den gleichen Abstand zur Bodenfläche (4) hat wie das Element.

2. Vorrichtung nach Anspruch 1,
**dadurch gekennzeichnet,**
**daß** die Walze (22) während der Bewegung über die Bearbeitungsfläche rotierend angetrieben wird, wobei die Rotationsrichtung so gewählt ist, daß die Richtung des Geschwindigkeitsvektors der Rotation in der Ebene der Bearbeitungsfläche der Richtung des Geschwindigkeitsvektors der Linearbewegung entspricht.

3. Vorrichtung nach Anspruch 1oder 2,
**dadurch gekennzeichnet,**
**daß** die Walze (22) mit einem Schleifmaterial beschichtet ist.

## Claims

1. Device for selective laser fusion for the production of a moulded part, comprising a process chamber (1) including a production volume (7) for said moulded part (16), that is provided underneath a bottom area (4) of said process chamber, as well as a levelling means for distributing material powder as a layer of constant thickness over a region of the bottom area, with said levelling means including an element (21) that is moved over said bottom area for distribution of the material powder,
**characterised in**
**that** an abrasive means configured in the form of a roller (22) is provided in said process chamber (1), which serves to smooth, by grinding action, the surface of each processed layer of said moulded part (16) placed in said production volume (7) prior to the application of a new material powder layer, with said roller (22) being fastened in front of said element (21) in such a manner that a movement of said element (21) for the distribution of said material powder causes the movement of said roller (22) over the processing surface, with said roller being spaced from the bottom area (4) by the same distance as said element.

2. Device according to Claim 1,
**characterised in**
**that** said roller (22) is driven to rotate during the movement over said processing surface, with said rotating means being so selected that the direction of the speed vector of the rotation in the plane of said processing surface corresponds to the orientation of the speed vector of the linear movement.

3. Device according to any of the Claims 1 or 2,
**characterised in**
**that** said roller (22) is coated with an abrasive material.

## Revendications

1. Dispositif de fusion sélective au laser pour la fabrication d'un corps moulé, comprenant une chambre d'opération (1), qui renferme un volume de constitution (7) pour ledit corps moulé (16), qui est disposé au-dessous d'une aire de fond (4) de ladite chambre d'opération, ainsi qu'un moyen égaliseur à répandre de la poudre en matériau sous forme d'une couche à épaisseur constante sur une zone de ladite aire de fond, ledit moyen égaliseur comprenant un élément (21), qui est passé sur ladite aire de fond afin de répandre la poudre en matériau,
**caractérisé en ce**
**qu'**un moyen abrasif, qui est configuré sous forme d'un rouleau (22), est disposé dans ladite chambre d'opération (1), qui sert à égaliser, par effet abrasif, la surface de chaque couche traitée dudit corps moulé (16), qui est placé dans ledit volume de constitution (7) avant le dépôt d'une nouvelle couche en poudre de matériau, ledit rouleau (22) étant fixé devant ledit élément d'une manière, qu'un mouvement dudit élément (21) à répandre ladite poudre en matériau cause le mouvement dudit rouleau (22) sur la surface de traitement, audit rouleau étant écarté de l'aire de fond (4) par la même distance que ledit élément.

2. Dispositif selon la revendication 1,
**caractérisé en ce**
**que** ledit rouleau (22) est entraîné de façon à tourner au cours du mouvement sur ladite surface de traitement, ledit moyen tournant étant choisi de façon, que le sens du vecteur de vitesse de la rotation dans le plan de ladite surface de traitement corresponde à l'orientation du vecteur de la vitesse du mouvement linéaire.

3. Dispositif selon une quelconque des revendications 1 ou 2,
**caractérisé en ce**
**que** ledit rouleau (22) est enduit d'un matériau abrasif.
